# EUROPEAN PATENT SPECIFICATION

(11) **EP 4 384 458 B1**
(45) Date of publication and mention of the grant of the patent: **30.09.2026**
(21) Application number: 22761555.6
(22) Date of filing: 09.08.2022
(51) Int. Cl.: B65G 1/04, B25J 15/00, B65G 47/90

(54) **GRIPPING DEVICE**
GREIFVORRICHTUNG
DISPOSITIF DE PRÉHENSION

(30) Priority: 10.08.2021 GB 202111501; 23.12.2021 GB 202118974
(43) Date of publication of application: 19.06.2024
(73) Proprietor: Ocado Innovation Limited, Hatfield, Hertfordshire AL10 9UL (GB)
(72) Inventor: JOHANNISSON, Wilhelm, Karl, HATFIELD Hertfordshire AL10 9UL (GB)
(74) Representative: Ocado Group IP Department
(86) International application number: PCT/EP2022/072373
(87) International publication number: WO 2023/017047

(56) References cited:
- CN-B- 106 429 785
- US-A1- 2016 325 928
- US-A1- 2021 139 239

## Description

### TECHNICAL FIELD

The present invention relates to the field of gripping devices. In particular, the present invention relates to gripping devices for load handling devices that lift and move storage containers.

### BACKGROUND

Some commercial and industrial activities require systems that enable the storage and retrieval of a large number of different products. WO2015/185628A describes a storage and fulfilment system in which stacks of storage containers are arranged within a grid storage structure. The containers are accessed from above by load handling devices operative on rails or tracks located on the top of the grid storage structure.

A given load handling device lifts a target container from the top of a stack, the target container usually containing inventory items needed to fulfil a customer order. The load handling devices typically comprise a gripping device for engaging the target container and a lifting means for lowering and raising the gripping device. Each time the load handling device lowers and raises the gripping device, the gripping device must reliably engage or release the target container as required.

It is against this background that the present invention has been devised. A workpiece grabbing device, disclosing the features of the preamble of claim 1, is known from CN106429785A. A container-handling vehicle is known from US2021139239A1.

### SUMMARY OF INVENTION

According to the invention, there is provided a gripping device according to claim 1.

The gripping device may be described as self-actuating, where it moves between gripping a container or releasing a container by virtue of other actions, such as lowering the gripping device into position over a container to be lifted or lifting the gripping device away from the container. The above gripping device advantageously requires no electrical component or separate actuator to activate or deactivate the gripper assembly.

As a container is required to be lifted, the load handling device may move to the required position in the storage structure above the container to be lifted. Once the load handling device is in position above the required container, the gripping device may be lowered onto the container. As the gripping device is lowered into position onto the container (e.g. an upper rim of the container), the lower frame member may contact or engage with the container, preventing it from being lowered further, while the upper frame member may continue to descend relative to the lower frame member until it contacts the lower frame member. The relative downwards movement of the upper frame member towards the lower frame member may activate the gripper assembly i.e. move the gripper assembly into the gripping configuration (e.g. from the release configuration) to grip a container.

The gripping device may subsequently be lifted in order to lift the container. As the gripping device is lifted, the upper frame member may lift from the lower frame member. The relative upwards movement of the upper frame member relative to the lower frame member (as the gripping device is lifted) may lock the gripper assembly in the gripping configuration. Further lifting of the gripping device may lift the lower frame member with the gripper assembly in the gripping configuration, thus lifting the container with the gripping device.

Reversal of the above movements may unlock and move the gripper assembly into the release configuration, thereby releasing the container. As a container is required to be released (e.g. for return of the container to a stack in the storage structure or for onwards movement of the container to another location, for example, a pick station), the load handling device may lower the gripping device to deposit the container at the required location. Once the container is lowered to the required location, the lower frame member may continue to descend onto the container (e.g. the upper rim of the container) until the lower frame member may contact the container, preventing it from being lowered further. The upper frame member may continue to descend relative to the lower frame member until it contacts the lower frame member. The relative downwards movement of the upper frame member towards the lower frame member may unlock the gripper assembly from the gripping configuration.

The gripping device may subsequently be lifted from the container to be released. As the gripping device is lifted from the container, the upper frame member may move upwards relative to the lower frame member. The relative upwards movement of the upper frame member away from the lower frame member may deactivate the gripper assembly, i.e. move the gripper assembly from the gripping configuration to the release configuration to release the container.

The gripper assembly is actuated passively by the relative vertical movement between the upper frame member and the lower frame member during the lowering and raising of the gripping device. The upper frame member need only move downwards onto the lower frame member (e.g. due to the weight of the upper frame member) as the gripping device is lowered onto a container to activate the gripper assembly. Similarly, the upper frame member need only move upwards in its normal action as the gripping device is lifted from a container to deactivate the gripper assembly.

Furthermore, the gripper assembly may be locked (e.g. into the gripping configuration) and/or unlocked (e.g. from the gripping configuration) by virtue of the relative vertical movement between the upper and lower frame members. Thus, the gripper assembly may be actuated (i.e. passively actuated or self-actuated) to move and lock into the gripping configuration by the single action of lowering the gripping device onto the container and lifting the container. Similarly, the gripper assembly may be deactivated (i.e. passively deactivated or self-deactivated) through unlocking and moving the gripper assembly to the release configuration by the single action of lowering the container back in place and lifting the gripping device away from the container.

The gripper assembly may comprise a gripper coupled to the lower frame member. The gripper may extend below the lower frame member for releasably gripping a container below the frame. The gripper assembly may comprise an actuator coupled to the upper frame member such that vertical movement of the upper frame member relative to the lower frame member may result in vertical movement of the actuator relative to the gripper.

The gripper may be actuated by vertical movement of the actuator relative to the gripper (i.e. the gripper may be actuated passively by the relative vertical movement between the upper frame member and the lower frame member).

The gripper may comprise a pair of legs that extend below the lower frame member. The pair of legs may be configured to move between a closed position and an open position. The pair of legs in the closed position may be sized to fit in an opening of a container to be lifted (e.g. an opening in the rim of the container). In this way, as the gripping device is lowered onto a container to be lifted, the legs of the gripper may be received in the opening of the container. The distance between the legs in the open position may be greater than the size of the opening in the container. In this way, once the legs are received in the opening of the container, moving the legs to the open position may engage the legs with the container and allow the container to be lifted as the gripping device is lifted. Thus, the open position may define the gripping configuration and the closed position may define the release configuration.

The actuator may comprise a plunger configured to move vertically downwards between the pair of legs of the gripper. Downwards movement of the upper frame member relative to the lower frame member may move or force the plunger between the pair of legs thereby moving the legs from the closed position to the open position. Upwards movement of the upper frame member relative to the lower frame member may pull the plunger out from between the pair of legs thereby bringing the legs from the open position to the closed position. The legs may be biased towards the closed position such that as the plunger moves upwards and/or is pulled out from between the pair of legs, the legs move to the closed position.

An inner surface of each gripper leg may comprise a grooved surface that cooperates with the plunger, such that vertical movement of the plunger between the pair of legs causes the legs to move between the closed position and the open position. The plunger may be shaped to cooperate with the inner surfaces of the legs as it moves vertically between the legs.

An upper portion of the gripper may comprise a channel formed between the pair of gripper legs for receiving the plunger when the legs are in the closed position. The channel may align the plunger as it moves vertically between the pair of legs.

The legs may be pivotally mounted to the lower frame member such that downwards movement of the plunger between the pair of legs causes pivotal rotation of each leg away from each other into the open position. On the other hand, upwards movement of the plunger between the pair of legs causes pivotal rotation of each leg towards each other into the closed position.

The legs may be substantially elongate along the vertical axis. As described above, the legs may be pivotally mounted to the lower frame member. The pivot point of each leg may be towards a proximal end of each leg such that the distal ends of the legs may move away from each other in the open position. The proximal end of each leg may comprise an inwardly extending ledge which can cooperate with the plunger as described further below. The inner surface of each leg may comprise a rounded surface which may be centred at the pivot point of each leg. The rounded surfaces may contact an outer surface of the plunger as the legs move between the closed and open positions. The rounded surfaces may ensure smooth movement of the legs as they pivot between the closed and open positions. The inner surfaces of the legs at the distal end may abut each other when the legs are in the closed position and may separate only when the gripper is actuated to move to the open position.

The plunger may be substantially elongate along the vertical axis and may comprise a rod portion (e.g. at the proximal end of the plunger) for connection or attachment of the plunger to the upper frame member. The plunger may include a narrowed portion towards the proximal end. The join between the narrowed portion and the remainder of the plunger may include an edge (e.g. a substantially right angled edge) which provides a stop shoulder for preventing the plunger from moving too far upwards and out from the channel between the gripper legs. In particular, the plunger stop shoulder may abut against the ledge (e.g. a lower surface of each ledge) when the legs are in the closed position. In this way, the plunger may be prevented from moving further upwards.

The distal end of the plunger may comprise opposing chamfered edges, i.e. the plunger may comprise a double bevel edge at the distal end. The bevel edge may be substantially centered between the gripper legs. As the plunger moves downwards, the bevel edge may be driven between the pair of legs such that the distal end of the plunger may push the legs apart into the open position.

The cooperated movements between the gripper legs and the plunger may be reversed as the plunger moves upwards and out from between the pair of legs, allowing pivotal rotation of the legs towards each other into the closed position.

The gripper assembly may comprise an indicating means for indicating whether the gripper legs are in the open position or the closed position (i.e. whether the gripper assembly is in the gripping configuration or the release configuration). The indicating means may comprise an indicating plate and a cover plate moveable to cover or expose the indicating plate. The indicating plate may comprise at least one differentiating region on its top surface (e.g. a coloured or textured surface). The cover plate may be moveable to cover or expose the indicating plate based on whether the legs are in the open or closed position.

The gripping device and/or the load handling device may comprise a detection means for detecting or assessing a status of the indicating means. The status of the indicating means may be based on whether the gripper legs are in the open position or the closed position (i.e. whether the gripper assembly is in the gripping configuration or the release configuration). The status of the indicating means may be assessed via a visual inspection (e.g. by a human or a camera). The detection means may comprise a camera.

The gripping device may comprise at least one locking mechanism for releasably locking (e.g. vertically locking) the upper frame member and the lower frame member to each other. By locking the upper frame member to the lower frame member (i.e. preventing the upper frame member from moving vertically away from the lower frame member), the locking mechanism may lock the gripper assembly in the gripping configuration. The gripping device may thus be lifted with the gripper assembly locked in the gripping configuration thereby lifting the container with it. The locking mechanism may move between a locked configuration (i.e. where the upper frame member may be locked to the lower frame member) and an unlocked configuration (i.e. where the upper and lower frame members are free to move vertically relative and away from each other)

The gripping device may comprise a lock actuator for moving the locking mechanism between the locked configuration and the unlocked configuration. The lock actuator may move the locking mechanism between the locked and unlocked configurations without the need for relative vertical movement between the upper frame member and the lower frame member.

The locking mechanism may comprise a twist-lock connector (e.g. a substantially elongate twist-lock connector) where at least a portion of the twist-lock connector is configured to rotate about its longitudinal axis. The twist-lock connector may comprise a fixing pin (e.g. at the lower end of the twist-lock connector) configured to be received within an opening in the lower frame member to affix the twist-lock connector to the lower frame member.

The twist-lock connector may comprise a locking pin (e.g. at the top end of the twist-lock connector). The locking pin may be substantially elongate in a horizontal axis and may be rotatable about the vertical axis between an unlocked position and a locked position.

The locking pin in the unlocked position may be alignable so as to slide within a slot in the upper frame member and be received in a cavity in the upper frame member. Thus, as the upper and lower frame members are brought together (e.g. as the upper frame member moves downwards onto the lower frame member), the locking pin in the unlocked position may be alignable so as to slide within the slot in the upper frame member. Once the upper frame member is flush on the lower frame member (e.g. when the upper and lower frame members are resting on a container to be lifted), the locking pin may be received within the cavity of the upper frame member. Once in position within the cavity, the locking pin may be configured to rotate about the vertical axis into a locked position where the locking pin (e.g. the longitudinal axis of the locking pin) is at an angle (e.g. a 45° or a 90° angle) to the slot in the upper frame member, thereby preventing the upper frame member from moving vertically away (i.e. upwards) from the lower frame member. By keeping the upper frame member flush with the lower frame member, the twist-lock connector locks the gripper assembly in the gripping configuration.

The locking pin may be configured to rotate to the unlocked position where the locking pin is aligned with the slot in the upper frame member so as to slide through the slot and allow the upper frame member to move or lift vertically away (i.e. upwards) from the lower frame member.

The lock actuator may move the locking mechanism between the locked configuration (i.e. when the locking pin is in the locked position) and the unlocked configuration (i.e. when the locking pin is in the unlocked position). In embodiments including multiple locking mechanisms, the gripping device may be configured to move each locking mechanism into the locked and/or unlocked configuration simultaneously to allow the upper frame member to be lifted away from the lower frame member. In particular, the lock actuator may move each locking mechanism between the locked configuration and the unlocked configuration simultaneously. The lock actuator may comprise a connector coupled to or connecting each locking mechanism so as to move each locking mechanism into the locked and/or unlocked configuration simultaneously. The connector may comprise a belt connector.

The gripping device may comprise a lock actuator for each locking mechanism. The lock actuator may comprise an actuating servo.

The upper and lower frame members may form a double ring frame or a double halo frame.

The upper and lower frame members may be substantially rectangular. The upper and lower frame members may include an opening (e.g. a substantially rectangular opening) that extends completely through the top and bottom sides of the upper and lower frame members. The gripping device may comprise at least two gripping assemblies, a first gripper assembly mounted on one end or side of the frame and a second gripper assembly mounted on an opposing end or side of the frame. The gripping device may comprise four gripping assemblies, two gripping assemblies on each opposing side of the frame. The upper and lower frame members may move vertically towards or away from each other to simultaneously actuate or deactivate the gripping assemblies. For example, downwards movement of the upper frame member towards the lower frame member (e.g. as the gripping device is lowered onto a container) may move or actuate each gripper assembly to the gripping configuration simultaneously, i.e. each gripper assembly in the gripping device may move from the release configuration to the gripping configuration simultaneously.

Upwards movement of the upper frame member away from the lower frame member (e.g. as the gripping device is lifted from a container) may move or deactivate each gripper assembly from the gripping configuration to the release configuration simultaneously. By tying the activating and deactivating actions of the gripping assemblies to the lowering and lifting of the upper frame member relative to the lower frame member, each gripper assembly in the gripping device can activate and deactivate simultaneously.

In embodiments including multiple gripping assemblies, each gripper assembly may comprise an indicating means as described above.

Further, there is provided a load handling device for lifting and moving containers stacked in stacks in a grid storage structure comprising a plurality of tracks arranged in a grid pattern above the stacks of containers, the load handling device comprising:
a body housing a driving mechanism operatively arranged for moving the load handling device on the grid;
a gripping device as described above for releasably gripping a container from a stack in the grid storage structure; and
a lifting mechanism configured to raise and lower the gripping device relative to the body.

The lifting mechanism may comprise at least one tether (e.g. two, three or four tethers) for connecting the gripping device to the load handling device. In this way, the gripping device may be suspended from the load handling device. The tether(s) may be mounted to the frame of the gripping device. The tether(s) may be reeled tether(s) that may be reeled and unreeled to respectively raise and lower the gripping device (e.g. onto a container to be lifted or to release a container into position). The tether(s) may be in the form of cables, ropes, tapes or any other form of tether with the necessary physical properties to lift the containers. The tethers may be formed of or comprise polyester material (e.g. woven polyester material). In particular, the tethers may comprise woven polyester tapes, e.g. seat belts (i.e. seat belts may be used as the tethers). The tethers may comprise dyneema tape. The tethers may comprise polyester material (e.g. woven polyester) combined with dyneema tape. The tethers may comprise cotton material. The tethers may comprise webbing material, e.g. webbed polyester, nylon, cotton.

The load handling device (e.g. the lifting mechanism) may be configured to lower the gripping device onto a container to actuate the gripping device and move the or each gripper assembly into the gripping configuration.

The load handling device (e.g. the lifting mechanism) may be configured to lift the gripping device away (i.e. vertically away) from a container to actuate the gripping device and move the or each gripper assembly into the release configuration.

Thus, the single action of the load handling device lowering the gripping device onto a container may actuate the gripping device. Similarly, the single action of the load handling device lifting the gripping device from a container may de-actuate the gripping device. In other words, the gripping device may be actuated and/or de-actuated passively (or be self-actuating/self-deactuating) by the lifting and lowering actions of the load handling device. Tying the actuating and de-actuating of the gripping device to the lowering and lifting of the gripping device by the load handling device may ensure that the gripping assemblies move to the gripping and/or release configurations simultaneously.

The load handling device (e.g. the lifting mechanism) may be configured to lift the gripping device such that the upper frame member moves vertically upwards relative to the lower frame member and locks the or each gripper assembly in the gripping configuration.

The load handling device (e.g. the lifting mechanism) may be configured to lower the gripping device such that the upper frame member moves vertically downwards onto the lower frame member and unlocks the or each gripper assembly from the gripping configuration.

Thus, the action of the load handling device lowering or lifting the gripping device onto or away from a container may lock or unlock the or each gripper assembly in the gripping configuration and/or the release configuration.

Tying the locking and unlocking of the gripper assemblies to the lowering and lifting of the gripping device by the load handling device may ensure that the gripping assemblies move between the locked and unlocked configurations simultaneously.

According to claim 15 of the invention, there is provided a method of gripping and lifting a container from a stack of container with the load handling

An example of a method, which is not part of the invention, may comprise actuating (e.g. passively) the gripper assembly into the gripping configuration by lowering the gripping device onto a container.

An example of a method, which is not part of the invention, may comprise lowering the upper frame member onto the lower frame member to move the gripper assembly into the gripping configuration.

An example of a method, which is not part of the invention, may comprise lowering the upper frame member onto the lower frame member to force the actuator downwards between the gripper legs so as to move the gripper assembly into the gripping configuration.

An example of a method, which is not part of the invention, may include lifting the gripping device so as to lift the upper frame member relative to the lower frame member and lock the gripping device in the gripping configuration.

Further lifting of the gripping device may lift the lower frame member thereby lifting the container.

An example of a method, which is not part of the invention, may comprise releasing a container onto a stack of containers, including the steps of:
lowering the gripping device with a container to be released until the container reaches the required location;
lowering the upper frame member onto the lower frame member such that the gripper assembly is unlocked from the gripping configuration;
lifting the upper frame member from the lower frame member so as to move the gripper assembly from the gripping configuration to the release configuration to release the container;
lifting the lower frame member from the container thereby lifting the gripping device away from the container being released.

An example of a method, which is not part of the invention, may comprise actuating (i.e. passively) the gripper assembly into the release configuration by lifting the gripper assembly away from the container.

The method may comprising lifting the gripping device to lift the upper frame member relative to the lower frame member to lift the actuator out from between the gripper legs so as to move the gripper assembly into the release configuration.

It is disclosed a system, which is not part of the invention, comprising:
a load-handling device as defined above;
a storage structure for accommodating containers stacked in stacks, the storage structure including a first set of tracks extending in a first direction and a second set of tracks extending in a second direction transverse to the first direction, the load-handling device configured to move on the first and second sets of tracks,
a control utility configured to control the load handling device to lift a container from a stack beneath the grid and/or lower a container onto a stack beneath the grid.

### BRIEF DESCRIPTION OF THE DRAWINGS

Aspects and example embodiments of the present invention will now be described with reference to the accompanying drawings.
Figure 1 is a schematic perspective view of a grid storage structure and containers;
Figure 2 is a schematic top view of a track on top of the storage structure of Figure 1;
Figure 3 shows load handling devices on top of the storage structure of Figure 1;
Figure 4 is a schematic perspective view of a load handling device with a lifting mechanism in a lowered configuration;
Figure 5 shows schematic cutaway views of the load handling device of Figure 4 with the lifting mechanism in a raised and a lowered configuration;
Figures 6A, 6B and 6C are perspective views of the load handling device with an embodiment of gripping device being lowered onto a container;
Figure 7 is a perspective view of the gripping device of Figures 6A, 6B and 6C;
Figures 8A, 8B and 8C are front views of the gripping device of Figures 6A, 6B and 6C with gripper assemblies in A) a release configuration, B) a gripping configuration and C) locked in the gripping configuration;
Figure 9 is a side view of the gripping device;
Figure 10 is a front view of the gripping device;
Figures 11A and 11B show front views of a gripping device with another embodiment of gripper assembly where the gripper assemblies are in A) a release configuration and B) a gripping configuration;
Figures 12A, 12B and 12C are front views of the gripping device of Figures 11A and 11B;
Figure 13 is a front view of the gripper assembly of Figures 11A and 11B;
Figure 14 is a front view of a portion of the gripping device of Figures 11A and 11B;
Figures 15A and 15B are section views taken through the line X-X in Figure 14, with a locking mechanism in A) an unlocked configuration and B) a locked configuration; and
Figure 16 is a top view of the gripping device of Figures 6A, 6B and 6C or Figures 11A and 11B.

### DETAILED DESCRIPTION

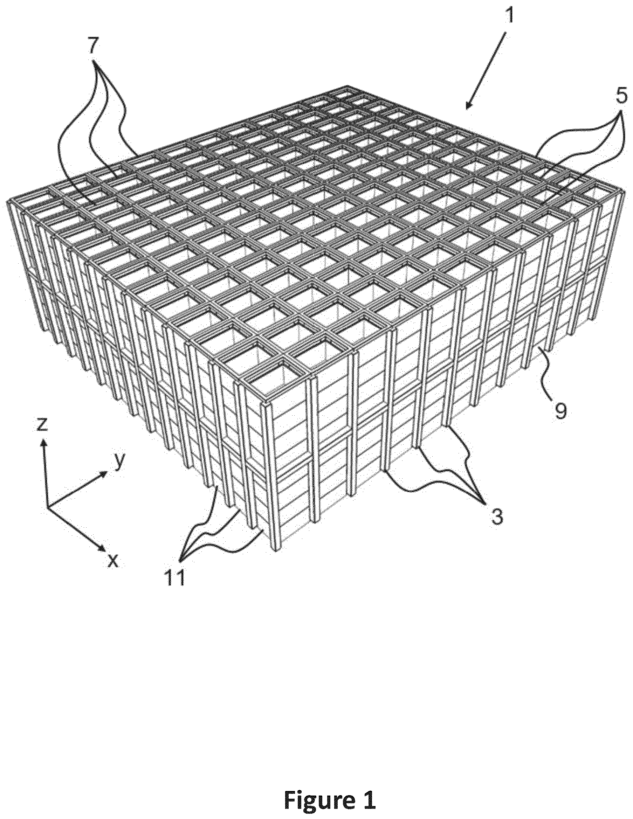

Figure 1 illustrates a storage structure 1 comprising upright members 3 and horizontal members 5, 7 which are supported by the upright members 3. The horizontal members 5 extend parallel to one another and the illustrated x-axis. The horizontal members 7 extend parallel to one another and the illustrated y-axis, and transversely to the horizontal members 5. The upright members 3 extend parallel to one another and the illustrated z-axis, and transversely to the horizontal members 5, 7. The horizontal members 5, 7 form a grid pattern defining a plurality of grid cells. In the illustrated example, storage containers 9 are arranged in stacks 11 beneath the grid cells defined by the grid pattern, one stack 11 of containers 9 per grid cell.

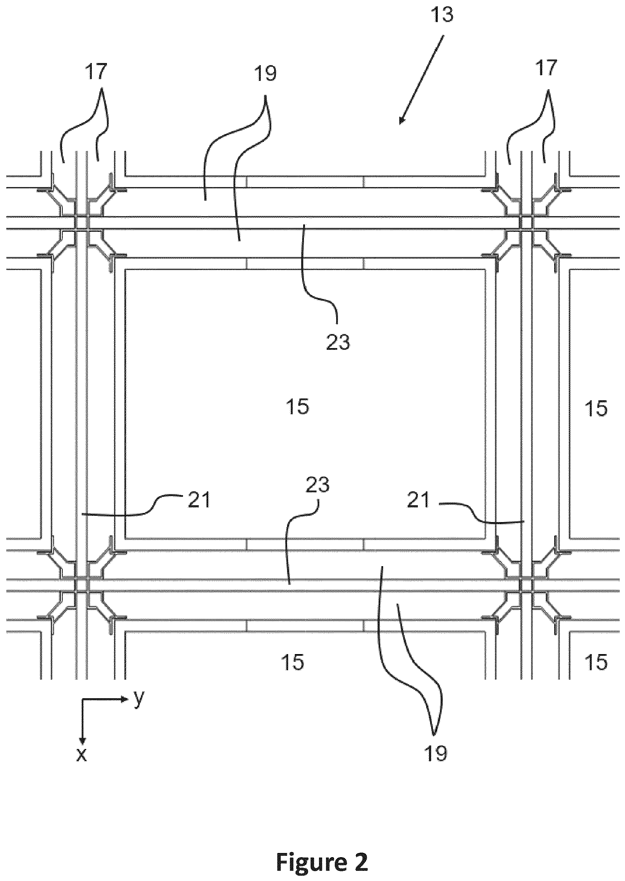

Figure 2 shows a large-scale plan view of a section of track structure 13 forming part of the storage structure 1 illustrated in Figure 1 and located on top of the horizontal members 5, 7 of the storage structure 1 illustrated in Figure 1. The track structure 13 may be provided by the horizontal members 5, 7 themselves (e.g. formed in or on the surfaces of the horizontal members 5, 7) or by one or more additional components mounted on top of the horizontal members 5, 7. The illustrated track structure 13 comprises x-direction tracks 17 and y-direction tracks 19, i.e. a first set of tracks 17 which extend in the x-direction and a second set of tracks 19 which extend in the y-direction, transverse to the tracks 17 in the first set of tracks 17. The tracks 17, 19 define apertures 15 at the centres of the grid cells. The apertures 15 are sized to allow containers 9 located beneath the grid cells to be lifted and lowered through the apertures 15. The x-direction tracks 17 are provided in pairs separated by channels 21, and the y-direction tracks 19 are provided in pairs separated by channels 23. Other arrangements of track structure may also be possible.

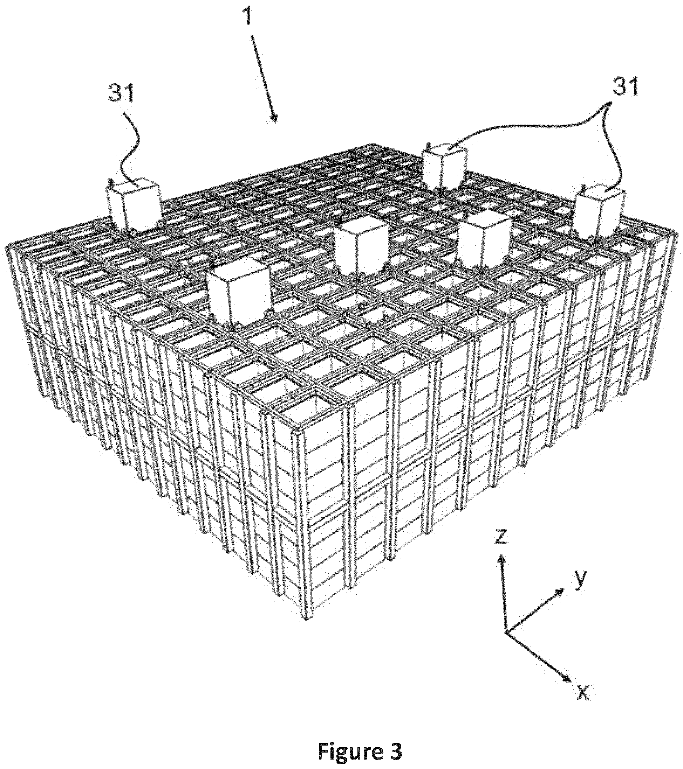

Figure 3 shows a plurality of load handling devices 31 moving on top of the storage structure 1 illustrated in Figure 1. The load handling devices 31, which may also be referred to as robots or bots, are provided with sets of wheels to engage with corresponding x- or y-direction tracks 17, 19 to enable the bots 31 to travel across the track structure 13 and reach specific grid cells. The illustrated pairs of tracks 17, 19 separated by channels 21, 23 allow bots 31 to occupy (or pass one another on) neighbouring grid cells without colliding with one another.

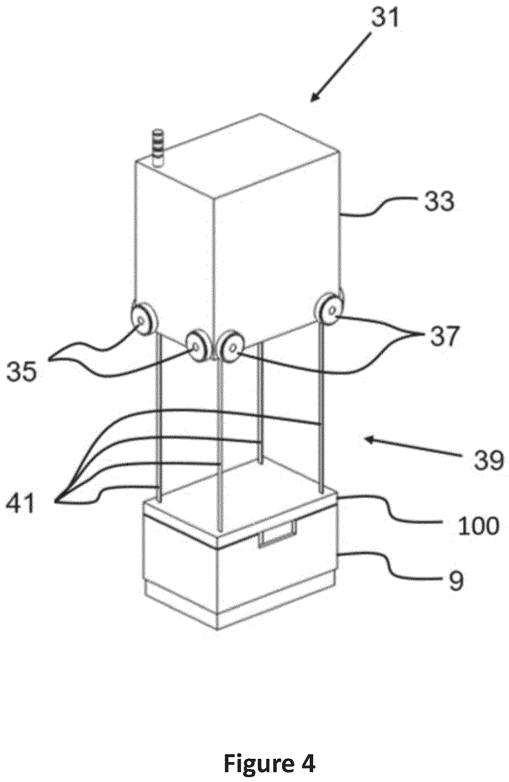

As illustrated in Figure 4, a bot 31 comprises a body 33 in or on which are mounted one or more components which enable the bot 31 to perform its intended functions. These functions may include moving across the storage structure 1 on the track structure 13 and raising or lowering containers 9 (e.g. from or to stacks 11) so that the bot 31 can retrieve or deposit containers 9 in specific locations defined by the grid pattern.

The illustrated bot 31 comprises first and second sets of wheels 35, 37 which are mounted on the body 33 of the bot 31 and enable the bot 31 to move in the x- and y-directions along the tracks 17 and 19, respectively. In particular, two wheels 35 are provided on the shorter side of the bot 31 visible in Figure 4, and a further two wheels 35 are provided on the opposite shorter side of the bot 31 (not visible in Figure 4). The wheels 35 engage with the tracks 17 and are rotatably mounted on the body 33 of the bot 31 to allow the bot 31 to move along the tracks 17. Analogously, two wheels 37 are provided on the longer side of the bot 31 visible in Figure 4, and a further two wheels 37 are provided on the opposite longer side of the bot 31 (not visible in Figure 4). The wheels 37 engage with the tracks 19 and are rotatably mounted on the body 33 of the bot 31 to allow the bot 31 to move along the tracks 19.

The bot 31 also comprises a lifting mechanism 39 configured to raise and lower containers 9. The illustrated lifting mechanism 39 comprises four tethers 41 which are connected at their lower ends to a gripping device 100. The tethers 41 may be in the form of cables, ropes, tapes, or any other form of tether with the necessary physical properties to lift the containers 9. The gripping device 100 comprises at least one gripper assembly configured to engage with features of the containers 9. For example, the containers 9 may be provided with one or more apertures in their upper sides with which the gripper assembly can engage. Alternatively or additionally, the gripper assembly may be configured to hook under the rims or lips of the containers 9, and/or to clamp or grasp the containers 9. The tethers 41 may be wound up or down to raise or lower the gripping device 100, as required. One or more motors or other means may be provided to effect or control the winding up or down of the tethers 41.

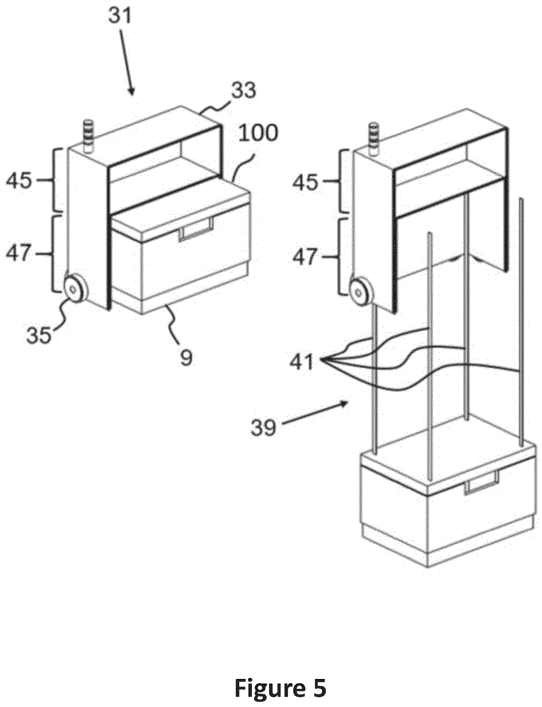

As can be seen in Figure 5, the body 33 of the illustrated bot 31 has an upper portion 45 and a lower portion 47. The upper portion 45 is configured to house one or more operation components (not shown). The lower portion 47 is arranged beneath the upper portion 45. The lower portion 47 comprises a container-receiving space or cavity for accommodating at least part of a container 9 that has been raised by the lifting mechanism 39. The container-receiving space is sized such that enough of a container 9 can fit inside the cavity to enable the bot 31 to move across the track structure 13 on top of storage structure 1 without the underside of the container 9 catching on the track structure 13 or another part of the storage structure 1. When the bot 31 has reached its intended destination, the lifting mechanism 39 controls the tethers 41 to lower the gripping device 100 and the corresponding container 9 out of the cavity and into the intended position. The intended position may be a stack 11 of containers 9 or an egress point of the storage structure 1 (or an ingress point of the storage structure 1 if the bot 31 has moved to collect a container 9 for storage in the storage structure 1). Although in the illustrated example the upper and lower portions 45, 47 are separated by a physical divider, in other embodiments, the upper and lower portions 45, 47 may not be physically divided by a specific component or part of the body 33 of the bot 31.

The container-receiving space of the bot 31 may not be within the body 33 of the bot 31. For example, the container-receiving space may instead be adjacent to the body 33 of the bot 31, e.g. in a cantilever arrangement with the weight of the body 33 of the bot 31 counterbalancing the weight of the container to be lifted. In such embodiments, a frame or arms of the lifting mechanism 39 may protrude horizontally from the body 33 of the bot 31, and the tethers 41 may be arranged at respective locations on the protruding frame/arms and configured to be raised and lowered from those locations to raise and lower a container into the container-receiving space adjacent to the body 33. The height at which the frame/arms is/are mounted on and protrude(s) from the body 33 of the bot 31 may be chosen to provide a desired effect. For example, it may be preferable for the frame/arms to protrude at a high level on the body 33 of the bot 31 to allow a larger container (or a plurality of containers) to be raised into the container-receiving space beneath the frame/arms. Alternatively, the frame/arms may be arranged to protrude lower down the body 33 (but still high enough to accommodate at least one container between the frame/arms and the track structure 13) to keep the centre of mass of the bot 31 lower when the bot 31 is loaded with a container.

To enable the bot 31 to move on the different wheels 35, 37 in the first and second directions, the bot 31 includes a wheel-positioning mechanism for selectively engaging either the first set of wheels 35 with the first set of tracks 17 or the second set of wheels 37 with the second set of tracks 19. The wheel-positioning mechanism is configured to raise and lower the first set of wheels 35 and/or the second set of wheels 37 relative to the body 33, thereby enabling the load handling device 31 to selectively move in either the first direction or the second direction across the tracks 17, 19 of the storage structure 1.

The wheel-positioning mechanism may include one or more linear actuators, rotary components or other means for raising and lowering at least one set of wheels 35, 37 relative to the body 33 of the bot 31 to bring the at least one set of wheels 35, 37 out of and into contact with the tracks 17, 19. In some examples, only one set of wheels is configured to be raised and lowered, and the act of lowering the one set of wheels may effectively lift the other set of wheels clear of the corresponding tracks while the act of raising the one set of wheels may effectively lower the other set of wheels into contact with the corresponding tracks. In other examples, both sets of wheels may be raised and lowered, advantageously meaning that the body 33 of the bot 31 stays substantially at the same height and therefore the weight of the body 33 and the components mounted thereon does not need to be lifted and lowered by the wheel-positioning mechanism.

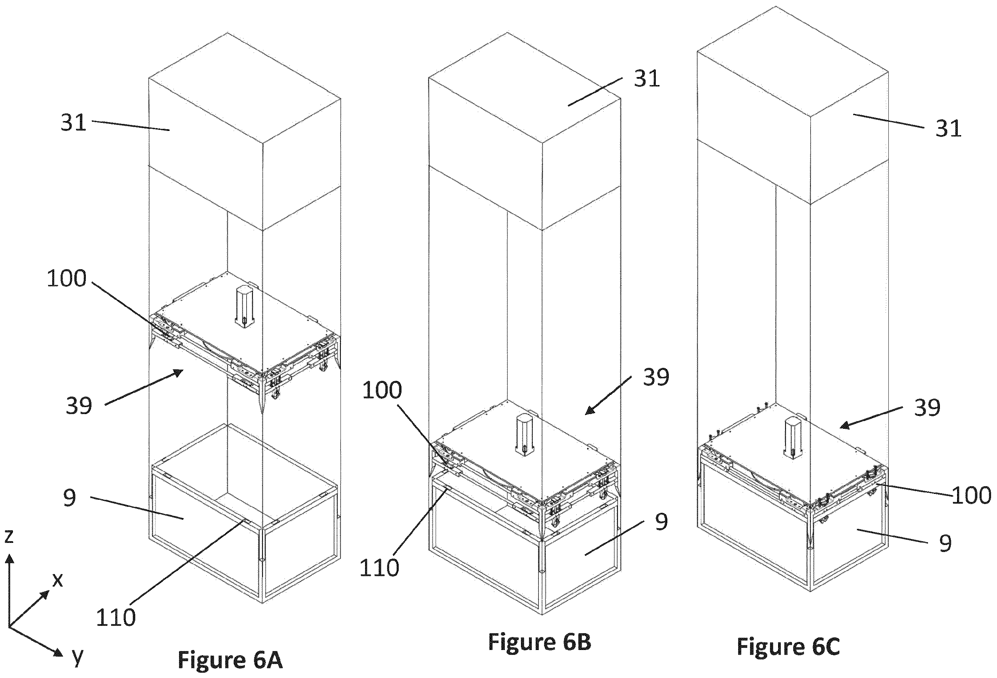

Figures 6A, 6B and 6C show perspective views of the load handling device with an embodiment of gripping device 100 suspended from the load handling device. Although not shown in these figures, the load handling device includes the features described above in relation to the load handling device or bot, including the first and second sets of wheels 35, 37 mounted to the body of the load handling device, the cavity for receiving at least part of the container and the reeled tethers connected at their lower ends to the gripping device 100 for connecting and suspending the gripping device 100 from the load handling device. The reeled tethers are reeled and unreeled respectively to raise and lower the gripping device 100 as shown in Figures 6A, 6B and 6C. The gripping device 100 is lowered onto a container to be lifted, until it contacts and lies flush with an upper rim of the container. Once the gripping device 100 is into position on the container as shown in Figure 6C, the gripping device 100 engages and grips the container.

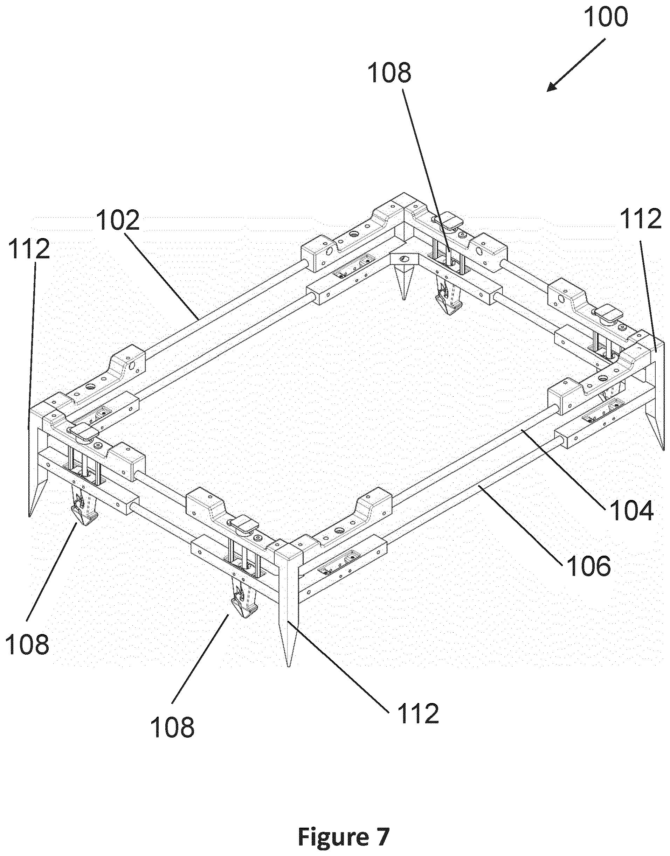

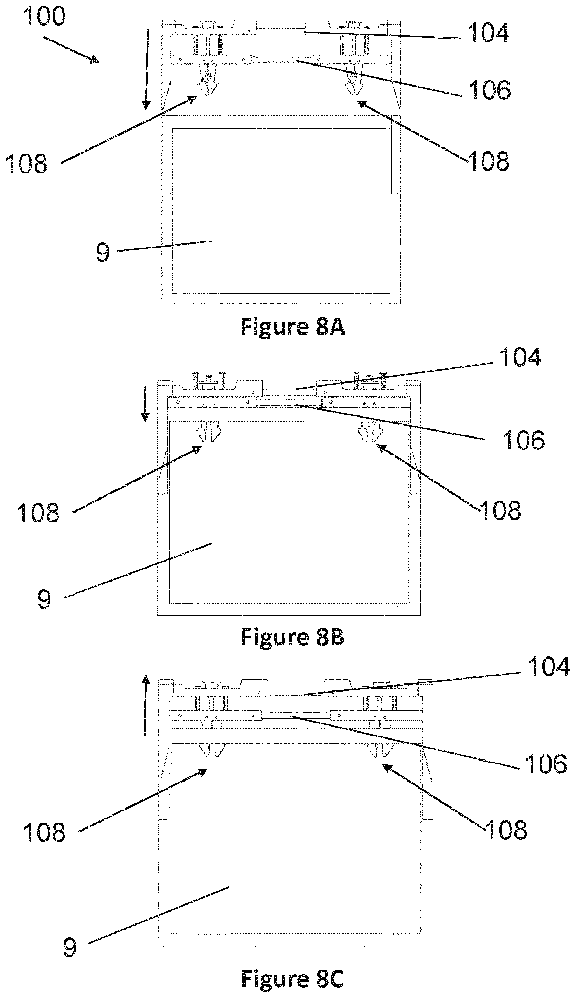

Figure 7 shows a perspective view of the gripping device 100. The gripping device 100 comprises a frame 102, which in this embodiment is substantially rectangular. The frame 102 includes an upper frame member 104 and a lower frame member 106 which are coupled to each other such that they are moveable vertically towards and away from each other. The gripping device 100 comprises four gripper assemblies 108, two on each opposing side of the frame 102. Each gripper assembly 108 is mounted to the frame 102 and configured to releasably grip a container. The gripper assemblies 108 are arranged to align with recesses or openings in the container (see Figures 8A, 8B and 8C) and when activated are configured to releasably grip or latch to the container. The gripping device 100 comprises four elongate guide members 112, mounted at each corner of the frame 102 and extending below the frame 102, for guiding and aligning the gripping device 100 in position on top of the container. The guide members 112 ensure the gripper assemblies 108 align with the recesses or openings in the container as the gripping device 100 is lowered onto the container.

Figures 8A, 8B and 8C show the gripping device 100 being lowered onto a container. As the gripping device 100 is lowered onto the container, the gripper assemblies 108 align with and are received by the openings in the container. As the gripping device 100 is lowered into position onto the container, the lower frame member 106 contacts and engages with an upper rim of the container, preventing it from being lowered further, while the upper frame member 104 continues to descend relative to the lower frame member 106 until it contacts the lower frame member 106s (see Figure 8B). The relative downwards movement of the upper frame member 104 towards the lower frame member 106 activates the gripper assemblies 108 and moves them into the gripping configuration to grip the container. The gripping device 100 is subsequently lifted in order to lift the container (see Figure 8C). As the gripping device 100 is lifted, the upper frame member 104 is lifted away from the lower frame member 106. The relative upwards movement of the upper frame member 104 relative to the lower frame member 106 locks the gripper assemblies 108 in the gripping configuration. Further lifting of the gripping device 100 lifts the lower frame member 106 with the gripper assemblies 108 in the gripping configuration thereby lifting the container with the gripper assembly 108.

The movements shown in Figures 8A, 8B and 8C can be reversed to unlock and move the gripper assemblies 108 into the release configuration in order to release the container. To release the container, the load handling device lowers the gripping device 100 and the container at the required location. Once the container is lowered to the required location, the lower frame member 106 continues to descend onto the upper rim of the container until the lower frame member 106 lies flush with the container. The upper frame member 104 continues to descend relative to the lower frame until it lies flush with the lower frame member 106. The relative downwards movement of the upper frame member 104 towards the lower frame member 106 unlocks the gripper assembly 108 from the gripping configuration. The gripping device 100 is then lifted from the container. As the gripping device 100 is lifted, the upper frame member 104 moves upwards relative to the lower frame member 106 to move the gripper assemblies 108 from the gripping configuration to the release configuration thereby releasing grip on the container. Thus, the gripper assemblies 108 are actuated passively by the relative vertical movement between the upper and lower frame member 106s during lowering and raising of the gripping device 100 by the load handling device. The single action of lowering the gripping device 100 onto a container actuates the gripper assemblies 108 into the gripping configuration. Similarly, the single action of raising the gripping device 100 from a container to be released moves the gripper assemblies 108 into the release configuration.

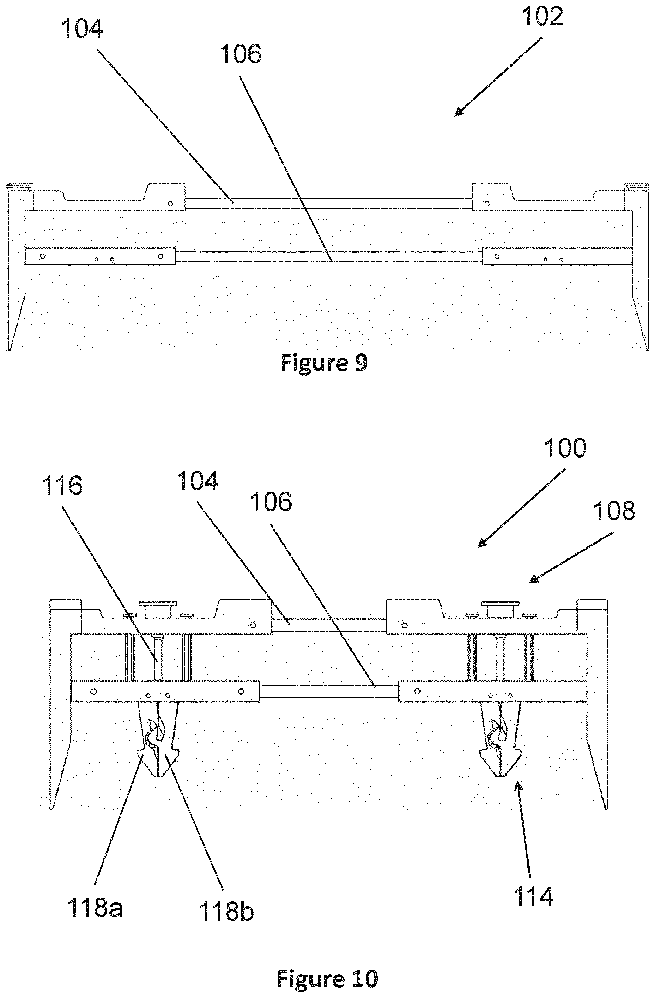

Figure 9 shows a side view of the gripping device 100 with the gripper assemblies 108 removed and Figure 10 shows a front view of the gripping device 100 including the gripper assemblies 108. In this embodiment, the gripper assemblies 108 are on the shorter side of the frame 102. Each gripper assembly 108 comprises a gripper coupled to the lower frame member 106 and an actuator 116 coupled to the upper frame member 104. The gripper comprises a pair of legs 118a, 118b that extend below the frame 102 and that are configured to move between a closed position (defining the release configuration) and an open position (defining the gripping configuration). The gripper legs 118a, 118b are sized to fit in the recess or opening 110 of the container to be lifted such that as the gripping device 100 is lowered onto the container, the legs 118a, 118b are received in the opening 110. The distance between the legs 118a, 118b in the open position is greater than the size of the opening 110 in the container such that, once the legs 118a, 118b are received in the opening 110, moving the legs 118a, 118b to the open position engages the legs 118a, 118b with the container (see Figures 8B and 8C). The actuator 116 comprises a plunger configured to move vertically downwards between the gripper legs 118a, 118b. Downwards movement of the upper frame member 104 relative to the lower frame member 106 moves the plunger 116 down between the gripper legs 118a, 118b so as to move the legs 118a, 118b from the closed position to the open position. Conversely, upwards movement of the upper frame member 104 relative to the lower frame member 106 pulls the plunger 116 out from between the gripper legs 118a, 118b so as to bring the legs 118a, 118b from the open position back to the closed position. In this way, the gripper legs 118a, 118b can move between the open and closed position by virtue of the relative vertical movement between the upper and lower frame member 106s as the gripping device 100 is lowered onto a container or raised from a container.

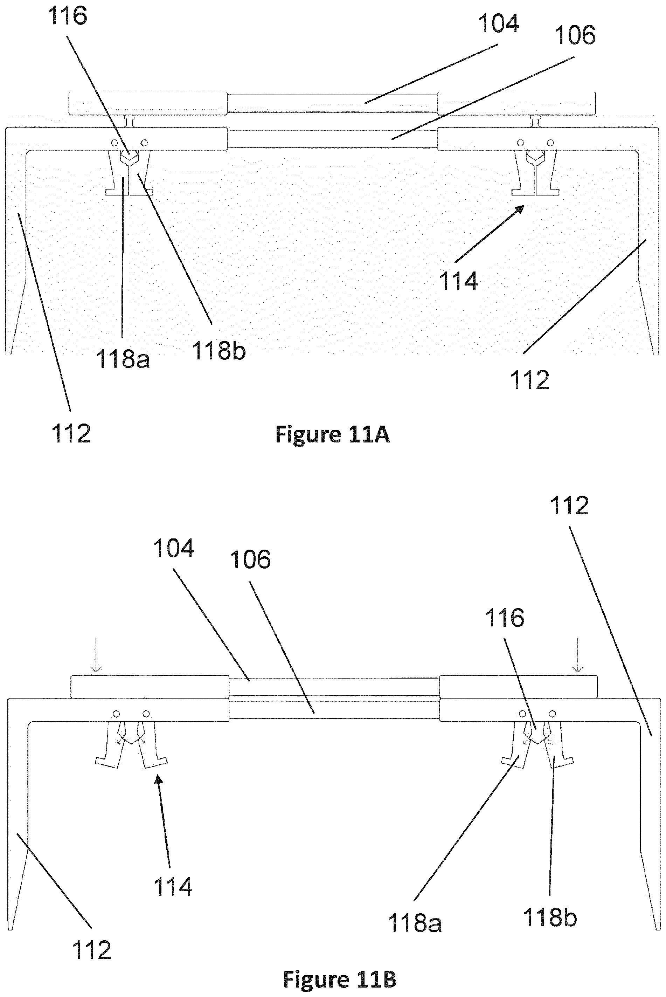

Figures 11 to 13 show another embodiment of gripper assembly 108. The other features of the gripping device may be as described above. Turning first to Figures 11A and 11B, each gripper assembly 108 comprises a gripper coupled to the lower frame member 106 and an actuator 116 coupled to the upper frame member 104. The gripper comprises a pair of legs 118a, 118b that extend below the frame 102 and that are configured to move between a closed position defining the release configuration (as shown in Figure 11A) and an open position defining the gripping configuration (as shown in Figure 11B). The legs 118a, 118b comprise feet 119a, 119b that extend outwards in opposite directions away from each other. When the legs 118a, 118b are in the closed position, the feet 119a, 119b are adjacent to each other and are receivable in the container opening 110. When the legs 118a, 118b are in the open position, the feet 119a, 119b are spaced apart to a distance greater than the size of the container aperture such that they engage and grip the container so that upwards movement of the gripping device 100 lifts the container upwards. The actuator 116 comprises a plunger configured to move vertically downwards between the gripper legs 118a, 118b such that downwards movement of the upper frame member 104 relative to the lower frame member 106 moves or pushes the plunger 116 between the gripper legs 118a, 118b so as to move the legs 118a, 118b into the open position. Conversely, upwards movement of the upper frame member 104 relative to the lower frame member 106 pulls the plunger 116 out from between the gripper legs 118a, 118b so as to move the legs 118a, 118b back to the closed position.

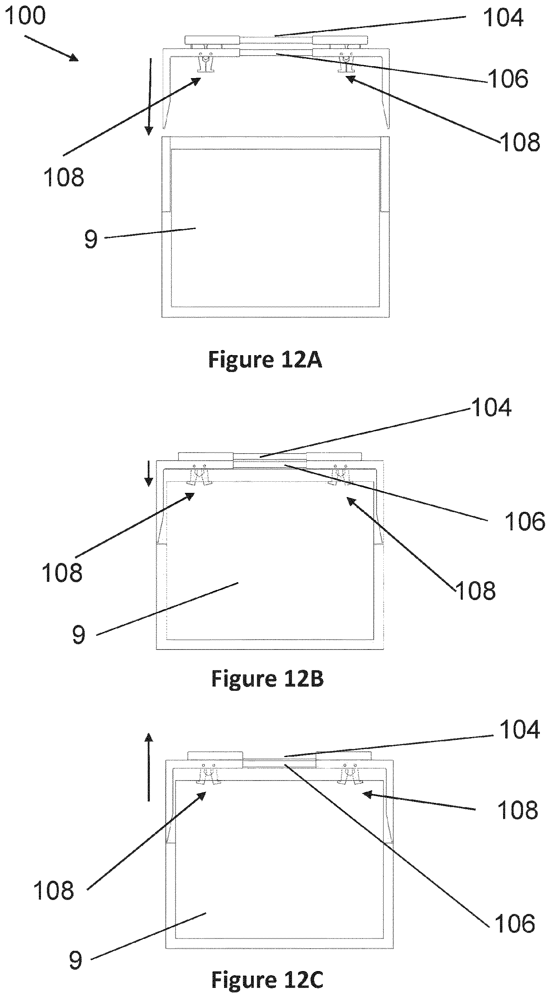

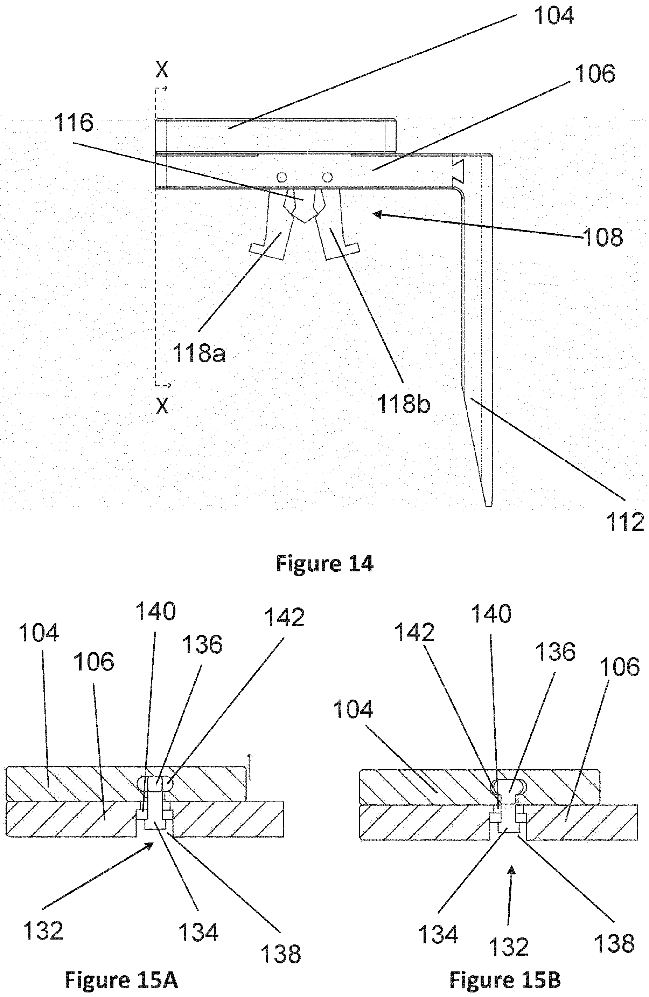

Figures 12A, 12B and 12C show actuation of the gripper assemblies 108 from the release configuration to the gripping configuration as the gripping device 100 is lowered onto the rim of the container as described above. Once the gripper assemblies 108 are in the gripping configuration and the gripping device 100 is lifted, the upper frame member 104 can move upwards relative to the lower frame member 106 and lock the gripper assemblies 108 in the gripping configuration as described above. In other embodiments, the gripping device 100 includes a lock actuator for locking the gripper assemblies 108 in the gripping configuration without the need for the upper frame member 104 to move upwards relative to the lower frame member 106. In other embodiments, the gripping device 100 includes a locking mechanism 132 described further below in relation to Figures 15A and 15B.

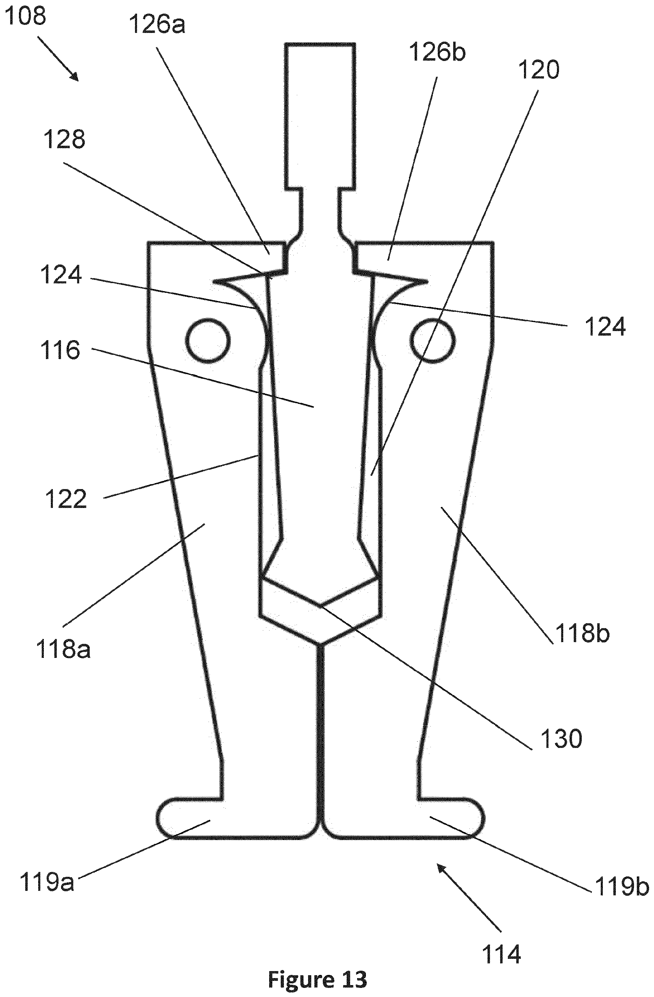

Figure 13 shows the components forming the gripper of Figures 12A, 12B and 12C. An upper portion of the gripper comprises a channel 120 formed between the pair of gripper legs 118a, 118b and for receiving the plunger 116 when the legs 118a, 118b are in the closed position. The channel 120 also aligns the plunger 116 as it moves vertically between the gripper legs 118a, 118b. The legs 118a, 118b are pivotally mounted to the lower frame member 106 such that downwards movement of the plunger 116 between the legs 118a, 118b causes pivotal rotation of each leg away from each other into the open position (shown in Figure 11B). Conversely, upwards movement of the plunger 116 between the legs 118a, 118b causes pivotal rotation of each leg towards each other into the closed position (shown in Figure 11A). An inner surface of each gripper leg comprises a grooved surface 122 that cooperates with the plunger 116. In particular, an inner surface of each leg comprises a rounded surface 124 centred at the pivot point of each leg which contacts an outer surface of the plunger 116 as the legs 118a, 118b move between the closed and open position. The rounded surfaces 124 ensure smooth movement of the legs 118a, 118b as they pivot between the closed and open positions.

A proximal end of each leg comprises an inwardly extending ledge 126a, 126b which prevents the plunger 116 from moving too far upwards or from being pulled out from the channel 120 between the legs 118a, 118b. In particular, the plunger 116 includes an edge 128 which provides a stop shoulder that abuts against the gripper ledge 126a, 126b preventing the plunger 116 from moving further upwards. A distal end of the plunger 116 comprises opposing chamfered edges to form a double bevel edge 130 at the distal end of the plunger 116. The bevel edge 130 is substantially centered between the gripper legs 118a, 118b such that as the plunger 116 moves downwards, the bevel edge 130 is driven between the pair of legs 118a, 118b and the plunger 116 pushes the legs 118a, 118b apart into the open position (see Figure 14). As the plunger 116 moves upwards, the legs 118a, 118b pivot towards each other (due to their weight) and back into the closed position.

Figures 15A and 15B show section views taken through the line X-X in Figure 14. In some embodiments, the gripping device 100 includes a locking mechanism 132 for releasably locking the upper frame member 104 to the lower frame member 106 thereby locking the gripper assemblies 108 in the gripping configuration. In particular, once the upper frame member 104 is flush with the lower frame member 106 such that the actuator 116 has pushed the gripper legs 118a, 118b out into the open position, the locking mechanism 132 can move to a locked configuration, preventing the upper frame member 104 from lifting away from the lower frame member 106, thereby keeping the gripper assemblies 108 in the gripping configuration. As shown by Figures 15A and 15B, the locking mechanism 132 comprises an elongate twist-lock connector with a fixing pin 134 at the lower end of the connector 132 and a locking pin 136 at the top end of the connector 132. The fixing pin 134 is received in an opening 138 in the lower frame member 106 to affix the connector 132 to the lower frame member 106. The locking pin 136 is rotatable about a vertical axis between an unlocked position where the locking pin 136 is alignable with a slot 140 in the upper frame member 104 (see Figure 15A) and a locked position where the locking pin 136 is rotated by 90° preventing it from sliding out from the slot 140 (see Figure 15B). As the upper frame member 104 moves downwards onto the lower frame member 106, the locking pin 136 in the unlocked position slides within the slot 140 and into a cavity 142 in the upper frame member 104. Once in position in the cavity 142, the locking pin 136 rotates from the unlocked position (shown in Figure 15A) to the locked position (shown in Figure 15B), thereby preventing the upper frame member 104 from moving upwards (i.e. away) from the lower frame member 106. By keeping the upper frame member 104 flush with the lower frame member 106, the connector 132 keeps the gripper assemblies 108 in the gripping configuration. Once the container needs to be released by the gripping device 100, the locking pin 136 can rotate by 90° to the unlocked position and slide out through the slot 140, allowing the upper frame member 104 to lift away from the lower frame member 106 to move the gripping device 100s from the gripping configuration to the release configuration. The gripping device 100 comprises four locking mechanisms 132, one at or near each corner of the frame 102. The gripping device 100 includes a lock actuator which simultaneously moves each locking mechanism 132 between the locked and unlocked configurations as required.

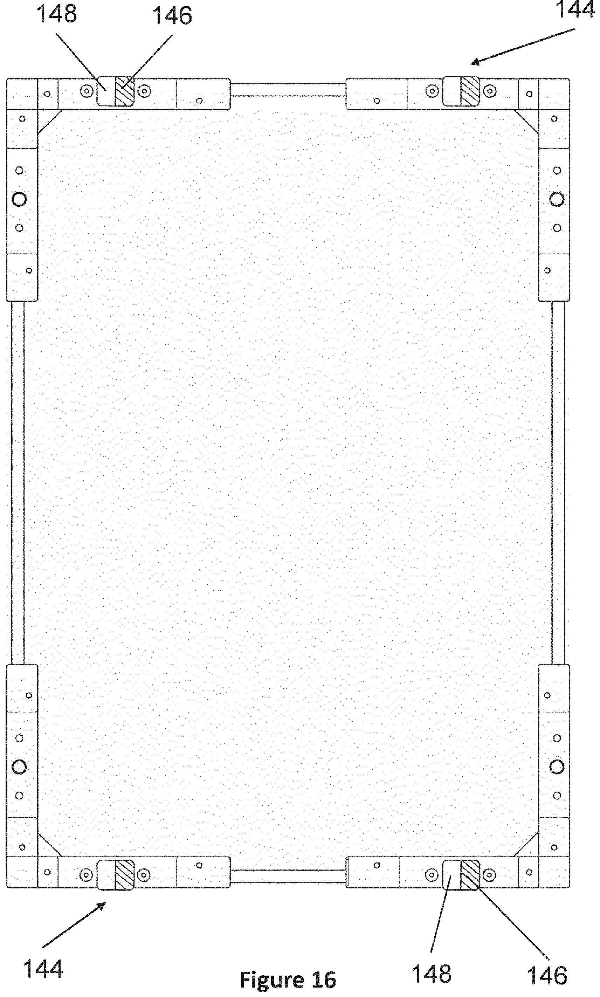

Figure 16 shows a top view of the gripping device 100. Each gripper assembly 108 includes an indicating means 144 for indicating whether the gripper assemblies 108 are in the gripping configuration or the release configuration. Each indicating means 144 includes an indicating plate 146 comprising a coloured surface and a cover plate 148 moveable to cover or expose the indicating plate 146 based on whether the gripper assembly 108 is in the gripping configuration or the release configuration. The load handling device comprises a camera for assessing the status of each indicating means 144 (i.e. whether the indicating means 144 indicate the gripper assemblies 108 are in the gripping or release configuration).

## Claims

1. A gripping device (100) for being suspended from a load handling device for lifting and moving containers stacked in stacks in a grid storage structure, the gripping device comprising:
a frame (102) including an upper frame member (104) and a lower frame member (106), the upper and lower frame members being vertically spaced and horizontally extending, the upper frame member being coupled to the lower frame member such that the upper and lower frame members are moveable vertically towards and away from each other;
a gripper assembly (108) mounted to the frame and configured to releasably grip a container from the stacks, the gripper assembly being moveable between a gripping configuration for gripping the container and a release configuration for releasing the container; and
wherein relative movement of the upper and lower frame members vertically towards or away from each other is configured to move the gripper assembly between the gripping configuration and the release configuration, wherein the gripping device is **characterised by** being configured, when being lowered, to move
the upper frame member vertically downwards onto the lower frame member to activate passively the gripping configuration, and/or, when being lifted, to move the upper frame member vertically upwards away from the lower frame member to activate passively the release configuration.

2. A gripping device according to claim 1, wherein the gripping device is configured to lock and/or unlock the gripper assembly in the gripping configuration and/or the release configuration.

3. A gripping device according to claims 1 or 2, wherein the gripper assembly includes a gripper coupled to the lower frame member and extending below the lower frame for releasably gripping a container below the frame, the gripper assembly further comprising an actuator coupled to the upper frame member such that vertical movement of the upper frame member relative to the lower frame member results in vertical movement of the actuator relative to the gripper.

4. A gripping device according to claim 3, wherein the gripper is actuated by the relative vertical movement between the upper frame member and the lower frame member.

5. A gripping device according to claims 3 or 4, wherein the gripper comprises a pair of gripper legs configured to move between an open position to define the gripping configuration and a closed position to define the release configuration.

6. A gripping device according to claim 5, wherein the actuator comprises a plunger configured to move vertically downwards or upwards between the gripper legs.

7. A gripping device according to claim 6, wherein downwards movement of the upper frame member relative to the lower frame member moves the plunger between the gripper legs to move the gripper legs into the open position and/or wherein upwards movement of the upper frame member relative to the lower frame member pulls the plunger out from between the gripper legs to move the gripper legs into the closed position.

8. A gripping device according to claims 6 or 7, wherein an inner surface of each leg of the gripper legs comprises a grooved surface that cooperates with the plunger such that vertical movement of the plunger between the gripper legs causes the legs to move between the open position and the closed position.

9. A gripping device according to claims 6 to 8, wherein an upper portion of the gripper legs comprises a channel formed between the legs for receiving the plunger when the legs are in the closed position and for aligning the plunger as it moves vertically between the gripper legs.

10. A gripping device according to claims 1 to 9, wherein the gripping device comprises at least two gripping assemblies, a first gripper assembly mounted on one end of the frame and a second gripper assembly mounted on an opposing end of the frame.

11. A gripping device according to claim 10, wherein the relative vertical movement between the upper frame member towards or away from the lower frame member is configured to move each gripper assembly between the gripping configuration and the release configuration simultaneously, and/or wherein the relative vertical movement of the upper frame member towards the lower frame member is configured to move each gripper assembly to the gripping configuration simultaneously, and/or wherein the relative vertical movement of the upper frame member away from the lower frame member is configured to move each gripper assembly to the release configuration simultaneously.

12. A gripping device according to claims 1 to 11, wherein the gripper assembly comprises an indicating means for indicating whether the gripper assembly is in the gripping configuration or the release configuration.

13. A gripping device according to claims 1 to 12, wherein the gripping device comprises a locking mechanism for releasably locking the upper frame member to the lower frame member so as to lock the or each gripper assembly in the gripping configuration, and optionally wherein the locking mechanism comprises a twist-lock connector where at least a portion of the connector is configured to rotate about its longitudinal axis.

14. A load handling device for lifting and moving containers stacked in stacks in a grid storage structure comprising a plurality of tracks arranged in a grid pattern above the stacks of containers, the load handling device comprising:
a body housing a driving mechanism operatively arranged for moving the load handling device on the grid;
a gripping device according to claims 1 to 13 for releasably gripping a container from a stack in the grid storage structure; and
a lifting mechanism configured to raise and lower the gripping device relative to the body, and optionally wherein the lifting mechanism is configured to:
lower the gripping device onto a container such that the upper frame member moves vertically downwards onto the lower frame member and moves the gripper assembly into the gripping configuration; and/or
lift the gripping device away from a container such that the upper frame member moves vertically upwards relative to the lower frame member and moves the gripper assembly into the release configuration; and/or
lift the gripping device such that the upper frame member moves vertically upwards relative to the lower frame member and lock the gripper assembly in the gripping configuration; and/or
lower the gripping device such that the upper frame member moves vertically downwards onto the lower frame member and unlock the gripper assembly from the gripping configuration.

15. A method of gripping and lifting a container from a stack of containers with a load handling device according to claim 14, the method comprising the steps of:
lowering the gripping device onto a container to be lifted until the lower frame member contacts or engages with the container;
lowering the upper frame member onto the lower frame member such that the gripper assembly moves into the gripping configuration and grips the container; and
lifting the gripping device so as to lift the container into the load handling device; and/or
lowering the gripping device with a gripped container until the gripped container reaches its destination;
raising the upper frame member away from the lower frame member such that the gripper assembly moves into the release configuration and releases the container; and
lifting the gripping device into the load handling device.

## Patentansprüche

1. Greifvorrichtung (100) zum Aufhängen an einer Lasthandhabungsvorrichtung zum Anheben und Bewegen von Behältern, die in Stapeln einer Gitterlagerkonstruktion gestapelt sind, wobei die Greifvorrichtung Folgendes umfasst:
einen Rahmen (102), der ein oberes Rahmenelement (104) und ein unteres Rahmenelement (106) beinhaltet, wobei das obere und das untere Rahmenelement vertikal beabstandet sind und sich horizontal erstrecken, wobei das obere Rahmenelement derart mit dem unteren Rahmenelement gekoppelt ist, dass das obere und das untere Rahmenelement vertikal aufeinander zu und voneinander weg beweglich sind;
eine Greiferbaugruppe (108), die an dem Rahmen montiert und dazu konfiguriert ist, einen Behälter aus den Stapeln lösbar zu greifen, wobei die Greiferbaugruppe zwischen einer Greifkonfiguration zum Greifen des Behälters und einer Freigabekonfiguration zum Freigeben des Behälters beweglich ist; und
wobei eine relative Bewegung des oberen und des unteren Rahmenelements vertikal aufeinander zu oder voneinander weg dazu konfiguriert ist, die Greiferbaugruppe zwischen der Greifkonfiguration und der Freigabekonfiguration zu bewegen, wobei die Greifvorrichtung **dadurch gekennzeichnet ist, dass** sie dazu konfiguriert ist, wenn sie abgesenkt wird, das obere Rahmenelement vertikal abwärts auf das untere Rahmenelement zu bewegen, um die Greifkonfiguration passiv zu aktivieren, und/oder, wenn sie angehoben wird, das obere Rahmenelement vertikal aufwärts von dem unteren Rahmenelement weg zu bewegen, um die Freigabekonfiguration passiv zu aktivieren.

2. Greifvorrichtung nach Anspruch 1, wobei die Greifvorrichtung dazu konfiguriert ist, die Greiferbaugruppe in der Greifkonfiguration und/oder der Freigabekonfiguration zu verriegeln und/oder zu entriegeln.

3. Greifvorrichtung nach Anspruch 1 oder 2, wobei die Greiferbaugruppe einen Greifer beinhaltet, der mit dem unteren Rahmenelement gekoppelt ist und sich unterhalb des unteren Rahmens erstreckt, um einen Behälter unterhalb des Rahmens lösbar zu greifen, wobei die Greiferbaugruppe ferner einen Aktor umfasst, der derart mit dem oberen Rahmenelement gekoppelt ist, dass eine vertikale Bewegung des oberen Rahmenelements relativ zu dem unteren Rahmenelement zu einer vertikalen Bewegung des Aktors relativ zu dem Greifer führt.

4. Greifvorrichtung nach Anspruch 3, wobei der Greifer durch die relative vertikale Bewegung zwischen dem oberen Rahmenelement und dem unteren Rahmenelement betätigt wird.

5. Greifvorrichtung nach Anspruch 3 oder 4, wobei der Greifer ein Paar von Greiferschenkeln umfasst, die dazu konfiguriert sind, sich zwischen einer offenen Position zum Definieren der Greifkonfiguration und einer geschlossenen Position zum Definieren der Freigabekonfiguration zu bewegen.

6. Greifvorrichtung nach Anspruch 5, wobei der Aktor einen Kolben umfasst, der dazu konfiguriert ist, sich zwischen den Greiferschenkeln vertikal abwärts oder aufwärts zu bewegen.

7. Greifvorrichtung nach Anspruch 6, wobei eine Abwärtsbewegung des oberen Rahmenelements relativ zu dem unteren Rahmenelement den Kolben zwischen den Greiferschenkeln bewegt, um die Greiferschenkel in die offene Position zu bewegen, und/oder wobei eine Aufwärtsbewegung des oberen Rahmenelements relativ zu dem unteren Rahmenelement den Kolben zwischen den Greiferschenkeln herauszieht, um die Greiferschenkel in die geschlossene Position zu bewegen.

8. Greifvorrichtung nach Anspruch 6 oder 7, wobei eine innere Oberfläche jedes Schenkels der Greiferschenkel eine gerillte Oberfläche umfasst, die derart mit dem Kolben zusammenwirkt, dass eine vertikale Bewegung des Kolbens zwischen den Greiferschenkeln bewirkt, dass sich die Schenkel zwischen der offenen und der geschlossenen Position bewegen.

9. Greifvorrichtung nach Anspruch 6 bis 8, wobei ein oberer Abschnitt der Greiferschenkel einen zwischen den Schenkeln ausgebildeten Kanal zum Aufnehmen des Kolbens, wenn die Schenkel in der geschlossenen Position sind, und zum Ausrichten des Kolbens, während er sich vertikal zwischen den Greiferschenkeln bewegt, umfasst.

10. Greifvorrichtung nach Anspruch 1 bis 9, wobei die Greifvorrichtung mindestens zwei Greifbaugruppen, eine erste Greiferbaugruppe, die an einem Ende des Rahmens montiert ist, und eine zweite Greiferbaugruppe, die an einem gegenüberliegenden Ende des Rahmens montiert ist, umfasst.

11. Greifvorrichtung nach Anspruch 10, wobei die relative vertikale Bewegung zwischen dem oberen Rahmenelement auf das untere Rahmenelement zu oder von diesem weg dazu konfiguriert ist, jede Greiferbaugruppe gleichzeitig zwischen der Greifkonfiguration und der Freigabekonfiguration zu bewegen, und/oder wobei die relative vertikale Bewegung des oberen Rahmenelements auf das untere Rahmenelement zu dazu konfiguriert ist, jede Greiferbaugruppe gleichzeitig in die Greifkonfiguration zu bewegen, und/oder wobei die relative vertikale Bewegung des oberen Rahmenelements von dem unteren Rahmenelement weg dazu konfiguriert ist, jede Greiferbaugruppe gleichzeitig in die Freigabekonfiguration zu bewegen.

12. Greifvorrichtung nach Anspruch 1 bis 11, wobei die Greiferbaugruppe ein Anzeigemittel zum Anzeigen, ob die Greiferbaugruppe in der Greifkonfiguration oder der Freigabekonfiguration ist, umfasst.

13. Greifvorrichtung nach Anspruch 1 bis 12, wobei die Greifvorrichtung einen Verriegelungsmechanismus zum lösbaren Verriegeln des oberen Rahmenelements mit dem unteren Rahmenelement umfasst, um die oder jede Greiferbaugruppe in der Greifkonfiguration zu verriegeln, und wobei der Verriegelungsmechanismus optional einen Twistlockverbinder umfasst, bei dem mindestens ein Abschnitt des Verbinders dazu konfiguriert ist, sich um seine Längsachse zu drehen.

14. Lasthandhabungsvorrichtung zum Anheben und Bewegen von Behältern, die in Stapeln in einer Gitterlagerkonstruktion gestapelt sind, die eine Vielzahl von Schienen umfasst, die in einem Gittermuster über den Stapeln von Behältern angeordnet sind, wobei die Lasthandhabungsvorrichtung Folgendes umfasst:
einen Körper, in dem ein Antriebsmechanismus untergebracht ist, der betriebsfähig zum Bewegen der Lasthandhabungsvorrichtung auf dem Gitter angeordnet ist;
eine Greifvorrichtung nach Anspruch 1 bis 13 zum lösbaren Greifen eines Behälters aus einem Stapel in der Gitterlagerkonstruktion; und
einen Hebemechanismus, der dazu konfiguriert ist, die Greifvorrichtung relativ zu dem Körper hochzuheben und abzusenken, wobei der Hebemechanismus optional zu Folgendem konfiguriert ist:
derartiges Absenken der Greifvorrichtung auf einen Behälter, dass sich das obere Rahmenelement vertikal abwärts auf das untere Rahmenelement bewegt und die Greiferbaugruppe in die Greifkonfiguration bewegt; und/oder
derartiges Anheben der Greifvorrichtung weg von einem Behälter, dass sich das obere Rahmenelement relativ zu dem unteren Rahmenelement vertikal aufwärts bewegt und die Greiferbaugruppe in die Freigabekonfiguration bewegt; und/oder
derartiges Anheben der Greifvorrichtung, dass sich das obere Rahmenelement relativ zu dem unteren Rahmenelement vertikal aufwärts bewegt, und Verriegeln der Greiferbaugruppe in der Greifkonfiguration; und/oder
derartiges Absenken der Greifvorrichtung, dass sich das obere Rahmenelement vertikal abwärts auf das untere Rahmenelement bewegt, und Entriegeln der Greiferbaugruppe aus der Greifkonfiguration.

15. Verfahren zum Greifen und Anheben eines Behälters aus einem Stapel von Behältern mit einer Lasthandhabungsvorrichtung nach Anspruch 14, wobei das Verfahren die folgenden Schritte umfasst:
Absenken der Greifvorrichtung auf einen anzuhebenden Behälter, bis das untere Rahmenelement den Behälter berührt oder mit diesem in Eingriff kommt;
derartiges Absenken des oberen Rahmenelements auf das untere Rahmenelement, dass sich die Greiferbaugruppe in die Greifkonfiguration bewegt und den Behälter greift; und
Anheben der Greifvorrichtung, um den Behälter in die Lasthandhabungsvorrichtung zu heben; und/oder
Absenken der Greifvorrichtung mit einem gegriffenen Behälter, bis der gegriffene Behälter seinen Zielort erreicht;
derartiges Hochheben des oberen Rahmenelements weg von dem unteren Rahmenelement, dass sich die Greiferbaugruppe in die Freigabekonfiguration bewegt und den Behälter freigibt; und
Anheben der Greifvorrichtung in die Lasthandhabungsvorrichtung.

## Revendications

1. Dispositif de préhension (100) destiné à être suspendu à un dispositif de manutention de charge pour soulever et déplacer des conteneurs empilés en piles dans une structure de stockage sous forme de grille, le dispositif de préhension comprenant :
un cadre (102) comportant un élément de cadre supérieur (104) et un élément de cadre inférieur (106), les éléments de cadre supérieur et inférieur étant espacés verticalement et s'étendant horizontalement, l'élément de cadre supérieur étant accouplé à l'élément de cadre inférieur de sorte que les éléments de cadre supérieur et inférieur soient mobiles verticalement l'un vers l'autre et à l'opposé l'un de l'autre ;
un ensemble de préhension (108) monté sur le cadre et configuré pour saisir de manière amovible un conteneur parmi les piles, l'ensemble de préhension étant mobile entre une configuration de préhension pour saisir le conteneur et une configuration de libération pour libérer le conteneur ; et
dans lequel le mouvement relatif des éléments de cadre supérieur et inférieur verticalement l'un vers l'autre ou à l'opposé l'un de l'autre est configuré pour faire passer l'ensemble de préhension de la configuration de préhension à la configuration de libération, et vice versa, dans lequel le dispositif de préhension est **caractérisé en ce qu'**il est configuré, lors de son abaissement, pour déplacer l'élément de cadre supérieur verticalement vers le bas sur l'élément de cadre inférieur afin d'activer passivement la configuration de préhension, et/ou, lors de son levage, pour déplacer l'élément de cadre supérieur verticalement vers le haut à l'opposé de l'élément de cadre inférieur afin d'activer passivement la configuration de libération.

2. Dispositif de préhension selon la revendication 1, dans lequel le dispositif de préhension est configuré pour verrouiller et/ou déverrouiller l'ensemble de préhension dans la configuration de préhension et/ou la configuration de libération.

3. Dispositif de préhension selon la revendication 1 ou 2, dans lequel l'ensemble de préhension comporte un outil de préhension accouplé à l'élément de cadre inférieur et s'étendant sous le cadre inférieur pour saisir de manière amovible un conteneur situé sous le cadre, l'outil de préhension comprenant en outre un actionneur accouplé à l'élément de cadre supérieur de sorte que le mouvement vertical de l'élément de cadre supérieur par rapport à l'élément de cadre inférieur entraîne un mouvement vertical de l'actionneur par rapport à l'outil de préhension.

4. Dispositif de préhension selon la revendication 3, dans lequel l'outil de préhension est actionné par le mouvement vertical relatif entre l'élément de cadre supérieur et l'élément de cadre inférieur.

5. Dispositif de préhension selon les revendications 3 ou 4, dans lequel l'outil de préhension comprend une paire de bras d'outil de préhension configurés pour passer d'une position ouverte permettant de définir la configuration de préhension à une position fermée permettant de définir la configuration de libération, et vice versa.

6. Dispositif de préhension selon la revendication 5, dans lequel l'actionneur comprend un piston configuré pour se déplacer verticalement vers le bas ou vers le haut entre les bras d'outil de préhension.

7. Dispositif de préhension selon la revendication 6, dans lequel le mouvement vers le bas de l'élément de cadre supérieur par rapport à l'élément de cadre inférieur déplace le piston entre les bras d'outil de préhension pour faire passer les bras d'outil de préhension en position ouverte et/ou dans lequel le mouvement vers le haut de l'élément de cadre supérieur par rapport à l'élément de cadre inférieur tire le piston hors de l'espace entre les bras d'outil de préhension pour faire passer les bras d'outil de préhension en position fermée.

8. Dispositif de préhension selon les revendications 6 ou 7, dans lequel une surface intérieure de chaque bras parmi les bras d'outil de préhension comprend une surface rainurée qui coopère avec le piston de sorte que le mouvement vertical du piston entre les bras d'outil de préhension fasse passer les bras de la position ouverte à la position fermée, et vice versa.

9. Dispositif de préhension selon les revendications 6 à 8, dans lequel une partie supérieure des bras d'outil de préhension comprend un canal formé entre les bras pour recevoir le piston lorsque les bras sont en position fermée et pour aligner le piston lorsqu'il se déplace verticalement entre les bras d'outil de préhension.

10. Dispositif de préhension selon les revendications 1 à 9, dans lequel le dispositif de préhension comprend au moins deux ensembles de préhension, un premier ensemble de préhension monté sur une extrémité du cadre et un second ensemble de préhension monté sur une extrémité opposée du cadre.

11. Dispositif de préhension selon la revendication 10, dans lequel le mouvement vertical relatif entre l'élément de cadre supérieur et l'élément de cadre inférieur l'un vers l'autre ou à l'opposé l'un de l'autre est configuré pour faire passer simultanément chaque ensemble de préhension de la configuration de préhension à la configuration de libération, et vice versa, et/ou dans lequel le mouvement vertical relatif de l'élément de cadre supérieur vers l'élément de cadre inférieur est configuré pour faire passer simultanément chaque ensemble de préhension en configuration de préhension, et/ou dans lequel le mouvement vertical relatif de l'élément de cadre supérieur à l'opposé de l'élément de cadre inférieur est configuré pour faire passer simultanément chaque ensemble de préhension en configuration de libération.

12. Dispositif de préhension selon les revendications 1 à 11, dans lequel l'ensemble de préhension comprend un moyen d'indication permettant d'indiquer si l'ensemble de préhension est en configuration de préhension ou en configuration de libération.

13. Dispositif de préhension selon les revendications 1 à 12, dans lequel le dispositif de préhension comprend un mécanisme de verrouillage permettant de verrouiller de manière amovible l'élément de cadre supérieur sur l'élément de cadre inférieur afin de verrouiller l'ensemble de préhension, ou chaque ensemble de préhension, dans la configuration de préhension, et dans lequel éventuellement le mécanisme de verrouillage comprend un raccord à verrouillage par rotation, au moins une partie du raccord étant configurée pour tourner autour de son axe longitudinal.

14. Dispositif de manutention de charge pour soulever et déplacer des conteneurs empilés en piles dans une structure de stockage sous forme de grille comprenant une pluralité de rails agencés selon un motif de grille au-dessus des piles de conteneurs, le dispositif de manutention de charge comprenant :
un corps logeant un mécanisme d'entraînement agencé fonctionnellement pour déplacer le dispositif de manutention de charge sur la grille ;
un dispositif de préhension selon les revendications 1 à 13 pour saisir de manière amovible un conteneur à partir d'une pile dans la structure de stockage sous forme de grille ; et
un mécanisme de levage configuré pour lever et abaisser le dispositif de préhension par rapport au corps, et dans lequel éventuellement le mécanisme de levage est configuré pour :
abaisser le dispositif de préhension sur un conteneur de sorte que l'élément de cadre supérieur se déplace verticalement vers le bas sur l'élément de cadre inférieur et passe l'ensemble de préhension en configuration de préhension ; et/ou
soulever le dispositif de préhension à l'opposé d'un conteneur de sorte que l'élément de cadre supérieur se déplace verticalement vers le haut par rapport à l'élément de cadre inférieur et passe l'ensemble de préhension en configuration de libération ; et/ou
soulever le dispositif de préhension de sorte que l'élément de cadre supérieur se déplace verticalement vers le haut par rapport à l'élément de cadre inférieur et verrouiller l'ensemble de préhension dans la configuration de préhension ; et/ou
abaisser le dispositif de préhension de sorte que l'élément de cadre supérieur se déplace verticalement vers le bas sur l'élément de cadre inférieur et déverrouiller l'ensemble de préhension de la configuration de préhension.

15. Procédé de préhension et de levage d'un conteneur à partir d'une pile de conteneurs à l'aide d'un dispositif de manutention de charge selon la revendication 14, le procédé comprenant les étapes consistant à :
abaisser le dispositif de préhension sur un conteneur à soulever jusqu'à ce que l'élément de cadre inférieur entre en contact ou vienne en prise avec le conteneur ;
abaisser l'élément de cadre supérieur sur l'élément de cadre inférieur de sorte que l'ensemble de préhension passe en configuration de préhension et saisisse le conteneur ; et
soulever le dispositif de préhension afin de soulever le conteneur dans le dispositif de manutention de charge ; et/ou
abaisser le dispositif de préhension avec un conteneur saisi jusqu'à ce que le conteneur saisi atteigne sa destination ;
lever l'élément e cadre supérieur à l'opposé de l'élément de cadre inférieur de sorte que l'ensemble de préhension passe en configuration de libération et libère le conteneur ; et
soulever le dispositif de préhension dans le dispositif de manutention de charge.
